(19) Europäisches Patentamt
European Patent Office
Office européen des brevets

(11) **EP 3 935 983 B1**

(12) **EUROPEAN PATENT SPECIFICATION**

(45) Date of publication and mention of the grant of the patent:
**07.08.2024 Bulletin 2024/32**

(21) Application number: **20767446.6**

(22) Date of filing: **15.01.2020**

(51) International Patent Classification (IPC):
**G06Q 30/0282** *(2023.01)* **G06Q 30/0601** *(2023.01)*

(52) Cooperative Patent Classification (CPC):
**G06Q 30/0631; G06Q 30/0282**

(86) International application number:
**PCT/JP2020/001128**

(87) International publication number:
**WO 2020/179236 (10.09.2020 Gazette 2020/37)**

(54) **CLOTHING RECOMMENDATION SYSTEM, CLOTHING RECOMMENDATION METHOD, AND CLOTHING RECOMMENDATION PROGRAM**

SYSTEM ZUR EMPFEHLUNG VON KLEIDUNG, VERFAHREN ZUR EMPFEHLUNG VON KLEIDUNG UND PROGRAMM ZUR EMPFEHLUNG VON KLEIDUNG

SYSTÈME DE RECOMMANDATION DE VÊTEMENT, PROCÉDÉ DE RECOMMANDATION DE VÊTEMENT ET PROGRAMME DE RECOMMANDATION DE VÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2019 JP 2019039341**

(43) Date of publication of application:
**12.01.2022 Bulletin 2022/02**

(73) Proprietor: **WACOAL CORP.**
**Kyoto-shi, Kyoto 601-8530 (JP)**

(72) Inventors:
• **YOSHIMURA Atsuko**
**Kyoto-shi, Kyoto 601-8530 (JP)**

• **KAWAMURA Atsuko**
**Kyoto-shi, Kyoto 601-8530 (JP)**
• **KISHIMOTO Taizou**
**Kyoto-shi, Kyoto 601-8530 (JP)**

(74) Representative: **Murgitroyd & Company**
**165-169 Scotland Street**
**Glasgow G5 8PL (GB)**

(56) References cited:
**JP-A- 2009 030 194       US-A1- 2011 218 876**
**US-A1- 2011 218 876**

• **No further relevant documents disclosed**

EP 3 935 983 B1

## Description

### Technical Field

One aspect of the present disclosure relates to a clothing recommendation system, a clothing recommendation method, and a clothing recommendation program.

### Background Art

Computer systems are known that recommends users clothing that matches their body type. For example, Patent Document 1 discloses a clothing sales system including clothing item groups each having a shape corresponding to each size of a plurality of preset body type patterns, and a guide means for guiding to which body type pattern and size, among the sizes of the plurality of body type patters, a user corresponds, based on data obtained by measuring a predetermined part of a body of the user. The clothing sales system provides, from the clothing item groups, a clothing item having a shape corresponding to the body type pattern and the size guided by the guide means.

Further the disclosures of US 2011/218876 A1, JP 2009 030194 A, JP 2002 074095 A may be helpful for understanding the present invention.

US 2011/218876 A1 refers to an online bra recommendation system and method provide one or more customer specific size and style recommendations. The recommendations are based on a calculated customer specific bra size and one or more customer style preferences. The calculated customer specific bra size is based on customer measurements. The customer measurements may include a measurement above the bust, around the fullest part of the bust and around the ribcage, under the bust. The customer may be instructed as to how to take appropriate measurements. The recommendation may further be based on feedback regarding current bra size and fit issues. The recommendation may further be based on one or more feature selections. The information may be collected through an online system, the recommendation made by a professional and the recommendation communicated to the user through the online system.

JP 2009 030194 A refers to a customization system of an undergarment having a three-dimensional human body measuring device, a server connected to the three-dimensional human body measuring device through a network and a terminal connected to the server through a network. The server has a database which has information regarding a standard ideal body type and individual information of a user. A measured value extracting means extracts measured values of prescribed parts of a human body of the user from measured data and an ideal body type calculating means calculates an ideal body type. A pattern data making means makes pattern data corresponding to the ideal body type. A recording means correlates sewing information corresponding to the pattern data and the individual information with information regarding the standard ideal body type and records in the database as counseling information. An evaluation means compares preference information of the user with the counseling information to evaluate and a final sewing information determining means determines final sewing information.

JP 2002 074095 A discloses a clothing selling system and store to provide clothing suitable for a user's figure. The user measures the top bust, the under bust and the length between the nipples. The user then judges which figure pattern of preset bust figure patterns is applied to and selects the same. Subsequently, the user selects a brassiere of a size suitable for the user from among designated figure patterns, according to the measurement data on the top bust and the like and the selected figure pattern.

### Citation List

### Patent Literature

[Patent Document 1] JP 2002-74095 A

### Summary of Invention

### Technical Problem

Since there are a variety of requests for clothing items and the body types of persons differ from person to person, it is not easy to provide clothing items preferred by individuals. A mechanism for efficiently recommending a clothing item to a user is therefore desired.

**Solution to Problem**

The present invention refers to a clothing recommendation system according to claim 1, a clothing recommendation method according to claim 4 and a clothing recommendation program according to claim 5. Advantageous embodiments may include features of depending claims.

A clothing recommendation system according to an aspect of the present disclosure includes at least one processor. The at least one processor is configured to: acquire a measured value of a body of a user; acquire additional information of the user other than the measured value; determine, based on a rule indicating a relationship between a measured value of a body of a person and a body type characteristic that is a characteristic of a body type of the person, the body type characteristic of the user from the acquired measured value; refer to a database storing clothing information indicating a correspondence relationship between clothing items and body type characteristics, and retrieve a clothing item corresponding to a clothing size of the user, the determined body type characteristic, and the acquired additional information; and output recommendation information indicating the retrieved clothing item.

A clothing recommendation method according to an aspect of the present disclosure is executed by a clothing recommendation system including at least one processor. The clothing recommendation method includes: acquiring a measured value of a body of a user; acquiring additional information of the user other than the measured value; determining, based on a rule indicating a relationship between a measured value of a body of a person and a body type characteristic that is a characteristic of a body type of the person, the body type characteristic of the user from the acquired measured value; referring to a database storing clothing information indicating a correspondence relationship between clothing items and body type characteristics, and retrieving a clothing item corresponding to a clothing size of the user, the determined body type characteristic, and the acquired additional information; and outputting recommendation information indicating the retrieved clothing item.

A clothing recommendation program according to an aspect of the present disclosure causes a computer to execute: acquiring a measured value of a body of a user; acquiring additional information of the user other than the measured value; determining, based on a rule indicating a relationship between a measured value of a body of a person and a body type characteristic that is a characteristic of a body type of the person, the body type characteristic of the user from the acquired measured value; referring to a database storing clothing information indicating a correspondence relationship between clothing items and body type characteristics, and retrieving a clothing item corresponding to a clothing size of the user, the determined body type characteristic, and the acquired additional information; and outputting recommendation information indicating the retrieved clothing item.

In such aspects, the clothing item is retrieved based on the clothing size of the user, the body type characteristic of the user determined from the measured value of the body of the user, and the additional information of the user, and the retrieval result is output. By retrieving the clothing item by using the three types of information, it is possible to efficiently recommend the clothing item to a user.

**Advantageous Effects of Invention**

According to an aspect of the present disclosure, it is possible to efficiently recommend a clothing item to a user.

**Brief Description of Drawings**

FIG. 1 is a diagram illustrating an example of a functional configuration of a clothing recommendation system according to an embodiment.
FIG. 2 is a diagram illustrating an example of a hardware configuration of a computer that may function as a clothing recommendation system according to an embodiment.
FIG. 3 is a diagram showing an example of body type characteristics in an embodiment.
FIG. 4 is a diagram showing an example of clothing information.
FIG. 5 is a flowchart showing an operation of a clothing recommendation system according to an embodiment.

**Description of Embodiments**

Hereinafter, embodiments of the present disclosure will be described in detail with reference to the accompanying drawings. In the description of the drawings, the same or equivalent element is denoted by the same reference numeral, and redundant description is omitted.

[Configuration of System]

A clothing recommendation system 10 according to the present embodiment is a computer system for recommending a user a clothing item that matches a body type. The user can know the clothing item that matches his/her body type by using the clothing recommendation system 10. The clothing item refers to a thing worn on the body. The clothing item recommended by the clothing recommendation system 10 is not limited and may be, for example, clothes, footwear, or accessories. The clothes may be tops (clothes worn on the upper body) or bottoms (clothes worn on the lower body). Examples of the clothes include clothes having a cup part, and specific examples thereof include bra, camisole with cups, and one-piece with cups. In the present embodiment, bra is shown as an example of the clothing.

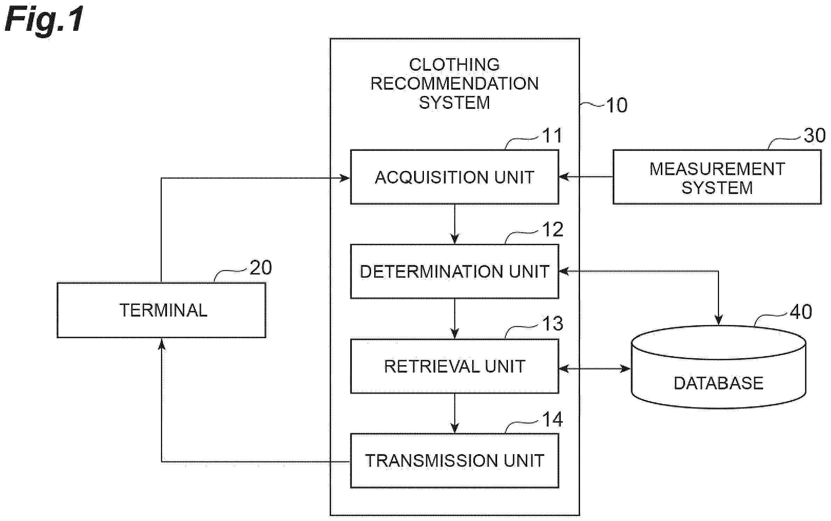

FIG. 1 is a diagram illustrating an example of a functional configuration of the clothing recommendation system 10. The clothing recommendation system 10 may transmit and receive data to and from a terminal 20, a measurement system 30, and a database 40 through communication networks. The configuration and type of each of the communication networks are not limited, and may be designed according to any policy. For example, the communication network may be constructed by the Internet, an intranet, or a combination thereof. The communication network may be constructed by a wired communication network, a wireless communication network, or a combination thereof.

The terminal 20 is a computer that receives information to be used as search criteria for a clothing item and displays information of the clothing item that matches the search criteria. The type of the terminal 20 is not limited, and may be, for example, a mobile terminal such as a mobile phone, an intelligent mobile phone (a smartphone), a tablet terminal, a wearable terminal, or a laptop computer, or may be a stationary personal computer. An owner and a user of the terminal 20 are not limited either. For example, the terminal 20 may be owned or used by a store that sells clothing items, or may be owned or used by a user who may purchase a clothing item.

The measurement system 30 is a computer system that measures a body of a user (more specifically, a part corresponding to a clothing item to be recommended) and provides a measured value. The specific configuration of the measurement system 30 is not limited and may be designed according to any policy. For example, the measurement system 30 may include a three-dimensional scanner (3D scanner) or various sensors. The measurement system 30 may be a computer system separate from the clothing recommendation system 10, or may be a component of the clothing recommendation system 10. Corresponding to the fact that the configuration of the measurement system 30 is not limited, the method of obtaining the measured value is also not limited. For example, the measurement system 30 may calculate the measured value based on information obtained from a component such as a 3D scanner and various sensors. Alternatively, the measurement system 30 may acquire a value measured or calculated by the component, as the measured value.

The database 40 is a device (storage unit) that stores information necessary for processing in the clothing recommendation system 10. In the present embodiment, the database 40 stores clothing information on clothing items. The clothing information indicates attributes of individual clothing items. The clothing information may indicate attributes of individual clothing items that can be traded for a fee or free of charge. The attribute of clothing item refers to a data item that characterizes the clothing item, and may include, for example, shape characteristic, dimension characteristic, fabric characteristic, member characteristic, structure characteristic, sewing characteristic, clothing pressure, or function. The attribute of clothing item may include an image of clothing item (i.e., a product image). The database 40 may further store body type characteristic information defining a correspondence relationship between a measured value of the body of the person and a body type characteristic. The body type characteristic refers to an index indicating the characteristic of the body type of the person, and is defined by calculation or classification based on the measured value, for example. The database 40 may further store clothing size information defining a correspondence relationship between the measured value of the body of the person and a clothing size. The clothing size is a value indicating the size of clothing item itself.

The clothing recommendation system 10 includes an acquisition unit 11, a determination unit 12, a retrieval unit 13, and a transmission unit 14 as functional elements. The acquisition unit 11 is a functional element that acquires information necessary for recommending the clothing item. More specifically, the acquisition unit 11 acquires at least the measured value of the body of the user and the additional information of the user other than the measured value. The determination unit 12 is a functional element that determines the body type characteristic of the user from the measured value. The retrieval unit 13 is a functional element that retrieves from the database 40 the clothing information corresponding to the clothing size of the user, the determined body type characteristic, and the acquired additional information. The clothing size of the user refers to a clothing size expected to fit the user. The transmission unit 14 is a functional element that transmits recommendation information indicating the retrieved clothing item to the terminal 20. This transmission is an example of output.

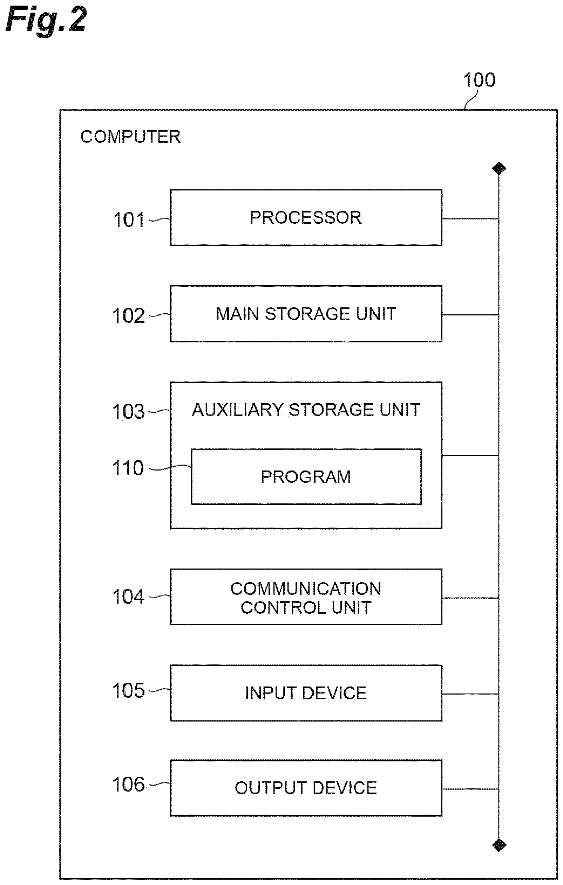

FIG. 2 is a diagram illustrating an example of a hardware configuration of a computer 100 that may function as the clothing recommendation system 10. For example, the computer 100 includes a processor 101, a main storage unit 102, an auxiliary storage unit 103, a communication control unit 104, an input device 105, and an output device 106. The processor 101 executes an operating system and an application program. The main storage unit 102 is constituted by, for example, a ROM and a RAM. The auxiliary storage unit 103 is constituted by, for example, a hard disk or a flash memory, and generally stores a larger amount of data than the main storage unit 102. The auxiliary storage unit 103 stores a program 110 for causing at least one computer to function as the clothing recommendation system 10. The communication control unit 104 is constituted by, for example, a network card or a wireless communication module. The input device 105 is constituted by, for example, a keyboard, a mouse, a touch panel, and the like. The output device 106 is constituted by, for example, a monitor and a speaker.

Each functional element of the clothing recommendation system 10 is implemented by loading the program 110 onto the processor 101 or the main storage unit 102 and executing the program. The program 110 includes code for implementing each functional element of the clothing recommendation system 10. The processor 101 operates the communication control unit 104, the input device 105, or the output device 106 according to the program 110, and reads and writes data in the main storage unit 102 or the auxiliary storage unit 103. This processing realizes each functional element of the clothing recommendation system 10. The data or database required for the processing may be stored in the main storage unit 102 or the auxiliary storage unit 103.

The program 110 corresponds to a clothing recommendation program. The program 110 may be provided after being fixedly recorded on a tangible recording medium such as a CD-ROM, a DVD-ROM, or a semiconductor memory. Alternatively, the program 110 may be provided via a communication network as a data signal superimposed on a carrier wave.

The clothing recommendation system 10 may be constituted by one or more computers (e.g., a server computer). When a plurality of computers are used, these computers are connected to each other via a communication network to configure the clothing recommendation system 10.

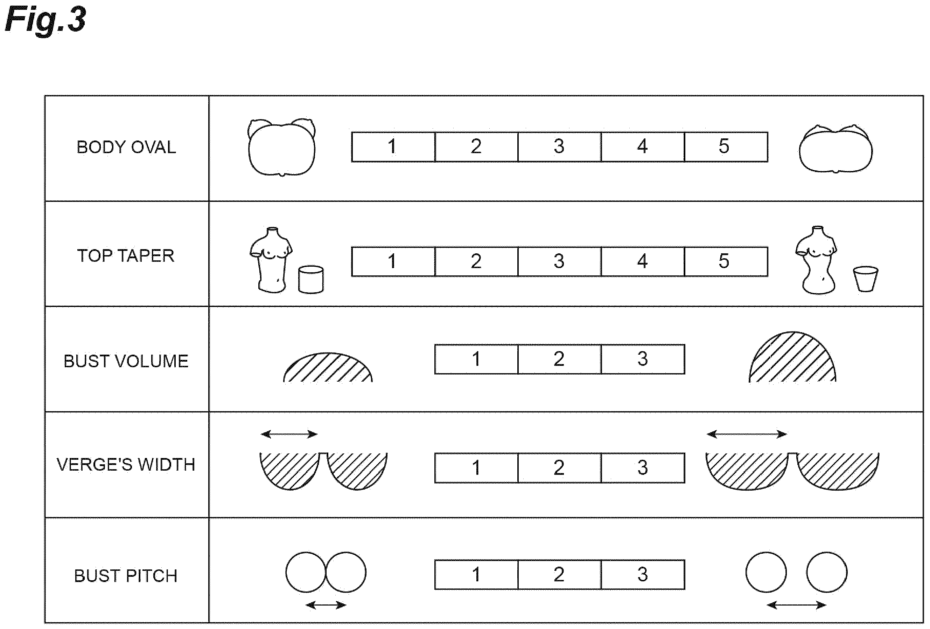

FIG. 3 is a diagram illustrating an example of the body type characteristics determined by the determination unit 12. In the present embodiment, the determination unit 12 determines at least one of five kinds of body type characteristics: body oval, top taper, bust volume, Verge's width, and bust pitch. All of these body type characteristics are largely related to the comfort of clothes having a cup part, such as bra.

The body oval is an index indicating characteristics of the cross-sectional shape of a trunk, and is represented by a ratio between an underbust breadth and an underbust depth. The body oval can be said as a kind of index related to characteristics of the upper body (trunk). The underbust breadth refers to the length of the trunk in the left-right direction at the lowest point of the bust (breasts) (more specifically, at the lowest position of the underbust). The underbust depth refers to the length of the trunk in the front-rear direction at the lowest point of the bust. In the present embodiment, the body oval is obtained by Equation (1). Equation (1) is a kind of rule indicating the relationship between the measured value and the body type characteristic.

$$(body\ oval) = (underbust\ breadth) / (underbust\ depth) ... (1)$$

In case that the body oval is small, it can be said that the user tends to be the round body type and the breasts tend to be outward. In case that the body oval is large, it can be said that the user tends to be the flat body type and the breasts tend to face the front.

The top taper is an index indicating characteristics of a trunk along the vertical direction, and is represented by a ratio between a chest breadth and the underbust breadth. The top taper can also be regarded as a kind of index related to characteristics of the upper body (trunk). The chest breadth refers to a length in the left-right direction of the trunk at the armpit (more specifically, the position where chest girth is measured). In the present embodiment, the top taper is obtained by Equation (2). Equation (2) is also a kind of rule indicating the relationship between the measured value and the body type characteristic.

$$(top\ taper) = (chest\ breadth) / (underbust\ breadth) ... (2)$$

In case that the top taper is small, it can be said that the difference among the bust, underbust, and waist of the user is small, and the back lower side of the bra tends to dig into the body easily. In case the top taper is large, it can be said that the difference between the bust, underbust, and waist of the user is large, and the back upper side of the bra tends to dig into the body easily.

The bust volume is a volume of bust, and is particularly related to the depth of a bra cup. The Verge's width is the width of the bottom of breast, and is particularly related to the type of bra wire. The bust pitch is the distance between the left and right breasts, and is also particularly related to the type of bra wire. Each of the bust volume, Verge's width, and bust pitch can be regarded as a kind of index related to characteristics of the bust.

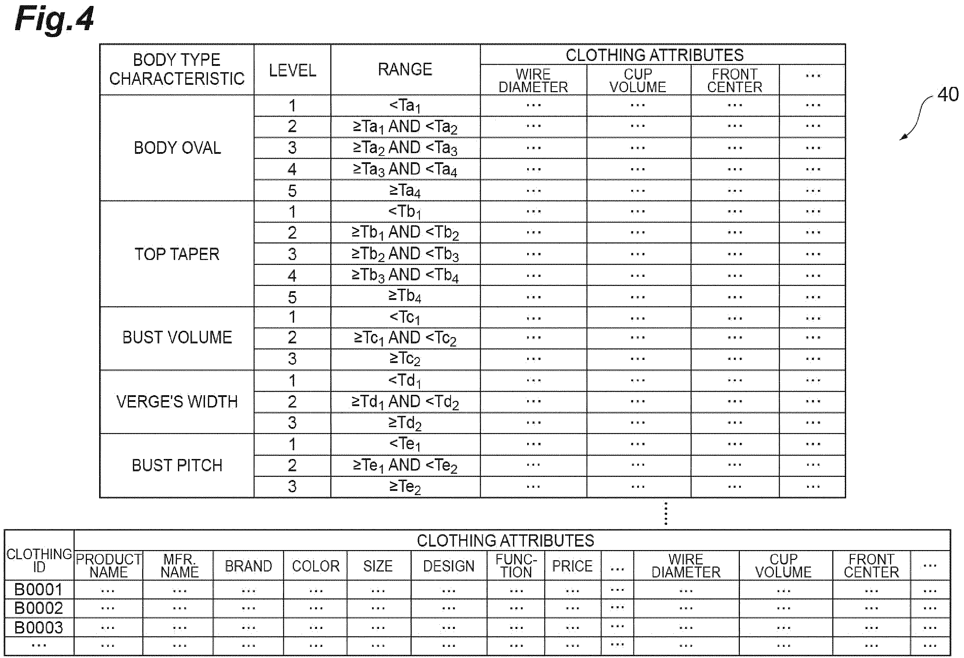

FIG. 4 is a diagram illustrating an example of the clothing information. The clothing information is information indicating a correspondence relationship between the clothing items and the body type characteristics. Each piece of clothing information includes a clothing ID for uniquely identifying a clothing item, and an attribute of clothing. For example, the clothing attributes may include product name, manufacturer name, brand name, product number, size, color, design, function, price, product image, and the like, and may further include detailed information according to the type of clothing item. In the case of bra, the size is represented by a combination of cup size and underbust, such as "B75" or "D65". In the case of bra, the clothing attributes may include detailed information such as wire diameter, cup volume, and front center.

In the example of FIG. 4, a plurality of levels corresponding to a plurality of numerical value ranges are set for each of the five types of body type characteristics (body oval, top taper, bust volume, Verge's width, and bust pitch). The level of body oval of user is determined by which numerical value range the value obtained by Equation (1) falls within. The level of top taper of user is determined by which numerical value range the value obtained by Equation (2) falls within. All of the bust volume, Verge's width, and bust pitch of user are determined by which numerical range the measured value falls within. Such a relationship between the level and the numerical range in the clothing information is a kind of rule indicating a relationship between the measured value and the body type characteristic. In FIG. 4, five levels are set for the body oval and top taper, and three levels are set for the bust volume, Verge's width, and bust pitch. However, the number of levels set in each body type characteristic is not limited.

In the example of FIG. 4, at least a part of the clothing attributes is associated with the body type characteristic, thereby indicating a correspondence relationship between the clothing items and the body type characteristics. However, the method of expressing the correspondence relationship between the clothing items and the body type characteristics is not limited thereto. For example, the correspondence relationship may be expressed by directly associating each record of the body type characteristic with a list of clothing IDs.

The data structure of any of the clothing information, the body type characteristic information, and the clothing size information is not limited at all, and may be designed according to any policy. For example, the information may be optionally normalized or denormalized, and stored on one or more data tables. In the example of FIG. 4, the clothing information includes the rule indicating the relationship between the measured values and the body type characteristics, but the information indicating the rule and the clothing information may be separated. The database 40 may be divided into a plurality of databases.

[Operation of System]

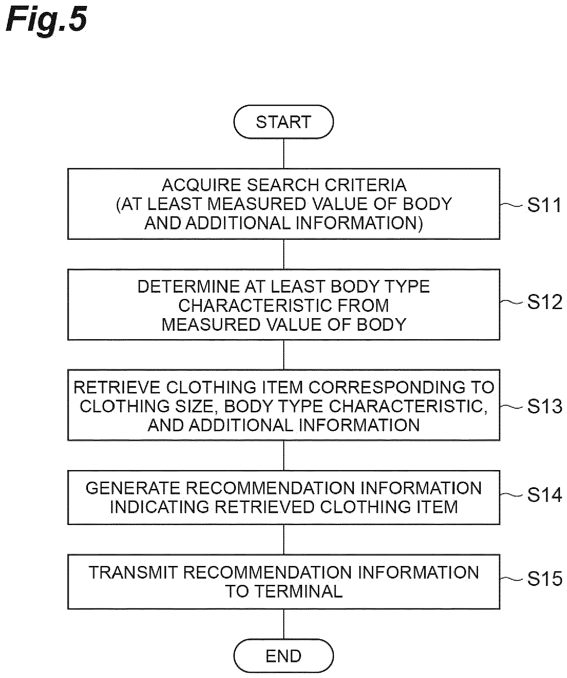

The operation of the clothing recommendation system 10 and the clothing recommendation method according to the present embodiment will be described with reference to FIG. 5. FIG. 5 is a flowchart showing the operation of the clothing recommendation system 10.

In step S11, the acquisition unit 11 acquires search criteria for a clothing item. The search criteria include at least a measured value of a body of a user and additional information of the user other than the measured value. The search criteria may further include a clothing size of the user. One or more measured values of the body of the user may be used. For example, in order to determine the body oval, the underbust breadth and the underbust depth are acquired as the measured values. In order to determine the body oval and the top taper, the underbust breadth, the underbust depth, and the chest breadth are acquired as the measured values. The additional information is any information related to the user and other than the measured value. For example, the additional information may indicate at least one of a user's preference regarding clothing item (e.g., manufacturer name, brand name, color, design, function, price, etc.) and an attribute of the user (e.g., age, occupation, etc.). One or more data items may constitute the additional information. At least a part of the additional information may be represented by one or more images (photographs or illustrations).

The transmission source of the search criteria is not limited, and one or more transmission sources may exist. Accordingly, the method of acquiring the search criteria by the acquisition unit 11 is also not limited. For example, the clothing size and the additional information may be input to the terminal 20 and transmitted to the clothing recommendation system 10. The measured value of the body of the user may be acquired by the measurement system 30 and transmitted to the clothing recommendation system 10, or may be input by the user or the measurer at the terminal 20 and transmitted to the clothing recommendation system 10. In these cases, the acquisition unit 11 receives data transmitted from the terminal 20 or the measurement system 30. Alternatively, the acquisition unit 11 may access the database of the measurement system 30 to read the measured value.

In step S12, the determination unit 12 determines at least the body type characteristic of the user from the acquired measured value. In case that the search criteria do not include the clothing size, the determination unit 12 refers to the clothing size information in the database 40 to further determine the clothing size of the user from the acquired measured value.

In this embodiment, the determination unit 12 determines the body type characteristic of the user by selecting one of a plurality of levels for each of the one or more body type characteristics based on the measured value. For this determination, the determination unit 12 refers to at least the clothing information in the database 40, and may further refer to the body type characteristic information. In the present embodiment, the determination unit 12 identifies the level of the body type characteristic of the user based on at least one of the body oval, top taper, bust volume, Verge's width, the bust pitch. The determination method will be described on the assumption of the clothing information in FIG. 4.

In the determination based on the body oval, the determination unit 12 divides the underbust breadth by the underbust depth to obtain a value of the body oval. The determination unit 12 then refers to the database 40 and identifies to which of the given five levels the value corresponds. For example, in case that the calculated value is greater than or equal to $Ta_3$ and less than $Ta_4$, the determination unit 12 identifies that the level of body oval is 4.

In the determination based on the top taper, the determination unit 12 divides the chest breadth by the underbust breadth to obtain a value of the top taper. The determination unit 12 then refers to the database 40 and identifies to which of the given five levels the value corresponds. For example, in case that the calculated value is greater than or equal to $Tb_1$ and less than $Tb_2$, the determination unit 12 identifies that the level of top taper is 2.

In the determination based on the bust volume, the determination unit 12 refers to the database 40 to identify to which of the given three levels the acquired value of bust volume corresponds. For example, in case that the calculated value is greater than or equal to $Tci$ and less than $Tc_2$, the determination unit 12 identifies that the level of bust volume is 2.

In the determination based on the Verge's width, the determination unit 12 refers to the database 40 to identify to which of the given three levels the acquired value of Verge's width corresponds. For example, in case that the calculated value is less than $Td_1$, the determination unit 12 identifies that the level of Verge's width is 1.

In the determination based on the bust pitch, the determination unit 12 refers to the database 40 to identify to which of the given three levels the acquired value of bust pitch corresponds. For example, in case that the calculated value is greater than or equal to $Te_2$, the determination unit 12 identifies that the level of bust pitch is 3.

In step S13, the retrieval unit 13 refers to the database 40 to retrieve the clothing item corresponding to the acquired or determined clothing size, the determined body type characteristic, and the acquired additional information. In case that multiple body type characteristics are used, retrieval unit 13 retrieves the clothing item that matches all of the body type characteristics. In case that the additional information includes a plurality of data items, the retrieval unit 13 retrieves the clothing item matching all of the data items. In case that at least a part of the additional information is indicated by one or more images, the retrieval unit 13 may execute an image retrieval using the images, or may identify a corresponding text from the images and execute the retrieval using the text.

In step S14, the retrieval unit 13 generates recommendation information indicating the retrieved clothing item. The recommendation information indicates the attributes of each clothing item retrieved. The retrieval unit 13 generates the recommendation information using the clothing information read from the database 40 as a retrieval result. The retrieval unit 13 may generate the recommendation information using data other than the clothing information.

In step S15, the transmission unit 14 transmits the recommendation information to the terminal 20. The terminal 20 receives and displays the recommendation information. The user can obtain detailed information of the clothing item that matches his/her body type by looking at the recommendation information. The recommendation information may be used as a reference when the user purchases a clothing item.

[Effect]

As described above, a clothing recommendation system according to an aspect of the present disclosure includes at least one processor. The at least one processor is configured to: acquire a measured value of a body of a user; acquire additional information of the user other than the measured value; determine, based on a rule indicating a relationship between a measured value of a body of a person and a body type characteristic that is a characteristic of a body type of the person, the body type characteristic of the user from the acquired measured value; refer to a database storing clothing information indicating a correspondence relationship between clothing items and body type characteristics, and retrieve a clothing item corresponding to a clothing size of the user, the determined body type characteristic, and the acquired additional information; and output recommendation information indicating the retrieved clothing item.

A clothing recommendation method according to an aspect of the present disclosure is executed by a clothing recommendation system including at least one processor. The clothing recommendation method includes: acquiring a measured value of a body of a user; acquiring additional information of the user other than the measured value; determining, based on a rule indicating a relationship between a measured value of a body of a person and a body type characteristic that is a characteristic of a body type of the person, the body type characteristic of the user from the acquired measured value; referring to a database storing clothing information indicating a correspondence relationship between clothing items and body type characteristics, and retrieving a clothing item corresponding to a clothing size of the user, the determined body type characteristic, and the acquired additional information; and outputting recommendation information indicating the retrieved clothing item.

A clothing recommendation program according to an aspect of the present disclosure causes a computer to execute: acquiring a measured value of a body of a user; acquiring additional information of the user other than the measured value; determining, based on a rule indicating a relationship between a measured value of a body of a person and a body type characteristic that is a characteristic of a body type of the person, the body type characteristic of the user from the acquired measured value; referring to a database storing clothing information indicating a correspondence relationship between clothing items and body type characteristics, and retrieving a clothing item corresponding to a clothing size of the user, the determined body type characteristic, and the acquired additional information; and outputting recommendation information indicating the retrieved clothing item.

In such aspects, the clothing item is retrieved based on the clothing size of the user, the body type characteristic of the user determined from the measured value of the body of the user, and the additional information of the user, and the retrieval result is output. By retrieving the clothing item by using the three types of information, it is possible to efficiently recommend clothing item to a user. By retrieving the clothing item by using the three types of information, it is possible to extract the clothing item that is estimated to satisfy the user's request by one retrieval process. It is therefore possible to reduce the consumption of hardware resources required for the retrieval. For example, it is possible to reduce at least one of the processing load of the processor that executes the retrieval and the number of communications on the communication network.

In the clothing recommendation system according to another aspect, the clothing item may be clothes having a cup part. By retrieving the clothes having the cup part based on the clothing size, the body type characteristic of the user determined from the measured value of the body of the user, and the additional information of the user, it is possible to efficiently recommend that clothes to the user.

In the clothing recommendation system according to another aspect, the measured value may include at least one of a combination of a underbust breadth and a underbust depth, a combination of a chest breadth and the underbust breadth, a bust volume that is a volume of bust, a Verge's width that is a width of a bottom of breast, and a bust pitch that is an interval between left and right breasts. The at least one processor may determine the body type characteristic of the user based on at least one of a body oval that is a ratio between the underbust breadth and the underbust depth, a top taper that is a ratio between the chest breadth and the underbust breadth, the bust volume, the Verge's width, and the bust pitch. All of these five types of indicators are largely related to the comfort of clothes having a cup part. Therefore, by using at least one of these indexes, it is possible to efficiently recommend the clothes having the cup part to the user.

[Modification]

The detailed explanations above have been made in detail based on the embodiments. However, the present disclosure is not limited to the above embodiment. The present disclosure can be variously modified without departing from the gist thereof.

In the above embodiment, the body oval is obtained by dividing the underbust breadth by the underbust depth, but the body oval may be a value obtained by dividing the underbust depth by the underbust breadth. In any event, the body oval is the ratio between the underbust breadth and the underbust depth. In the above embodiment, the top taper is obtained by dividing the chest breadth by the underbust breadth, but the top taper may be a value obtained by dividing the underbust breadth by the chest breadth. In any event, the top taper is the ratio between the chest breadth and the underbust breadth.

In the above embodiment, determination unit 12 determines the values of body oval and top taper, but this calculation may be executed by another computer system (for example, measurement system 30). In this case, the clothing recommendation system acquires the body oval or the top taper as the measured value. The clothing recommendation system then determines the body type characteristic (e.g., level) for body oval or top taper of the user from the acquired value, based on the rule indicating the relationship between the measured value and the body type characteristic.

In the above embodiment, a plurality of levels are set for each body type characteristic, but the concept of level is not essential. The clothing information may define the correspondence relationship between the clothing items and the body type characteristics without using a level.

The body oval, top taper, bust volume, Verge's width, and bust pitch may be used to retrieve clothes with cup parts other than bra. These five types of body type characteristics are not essential, and the clothing recommendation system may determine any body type characteristic according to the type of clothing item.

In the above embodiment, the clothing recommendation system 10 is connected to the terminal 20 via a communication network, but the configuration of the clothing recommendation system 10 is not limited thereto. For example, the clothing recommendation system 10 may include a function of the terminal 20. In this case, the clothing recommendation system 10 displays the recommendation information on a monitor. This displaying is an example of output.

In case that the magnitude relationship between two numerical values is compared in the clothing recommendation system, either of two criteria "equal to or greater than" and "greater than" may be used, and either of two criteria "equal to or less than" and "less than" may be used. The selection of such a criterion does not change the technical significance of the process of comparing the magnitude relationship between two numerical values.

The procedure of the clothing recommendation method executed by at least one processor is not limited to the examples in the above embodiment. For example, some of the above-described steps (processes) may be omitted, or the steps may be executed in a different order. Further, any two or more of steps among the above-described steps may be combined, or a part of the steps may be modified or deleted. Alternatively, other steps may be executed in addition to the above steps.

**Reference Signs List**

10:   clothing recommendation system
11:   acquisition unit
12:   determination unit
13:   retrieval unit
14:   transmission unit
20:   terminal
30:   measurement system
40:   database

**Claims**

1. A clothing recommendation system (10) comprising:

   at least one processor (101),
   **characterized in that** the at least one processor (101) is configured to:

   acquire, from a measurement system (30) including a three-dimensional scanner or a sensor, a measured value of a body of a user, the measured value including at least a combination of an underbust breadth and an underbust depth;
   acquire, from a terminal (20), additional information of the user other than the measured value;
   receive a clothing size of the user from the terminal (20), or refer to a database (40) storing clothing size information defining a correspondence relationship between a measured value of a body of a person and a clothing size to determine the clothing size of the user from the acquired measured value;
   calculate a body oval that is a ratio between the underbust breadth and the underbust depth;
   refer to the database (40) further storing a rule indicating a relationship between a measured value of a body of a person and a body type characteristic that is a characteristic of a body type of the person to determine the body type characteristic of the user from the calculated body oval;
   refer to the database (40) further storing clothing information indicating a correspondence relationship between clothing items and body type characteristics, and retrieve a clothing item corresponding to the clothing size of the user, the determined body type characteristic, and the acquired additional information; and
   transmit recommendation information indicating the retrieved clothing item to the terminal (20).

2. The clothing recommendation system (10) according to claim 1, **characterized in that** the clothing item is clothes having a cup part.

3. The clothing recommendation system (10) according to claim 2, **characterized in that**

   the measured value further includes at least one of a combination of a chest breadth and the underbust breadth, a bust volume that is a volume of bust, a Verge's width that is a width of a bottom of breast, and a bust pitch that is an interval between left and right breasts, and
   the at least one processor (101) determines the body type characteristic of the user based on at least one of a top taper that is a ratio between the chest breadth and the underbust breadth, the bust volume, the Verge's width, and the bust pitch.

4. A clothing recommendation method executed by a clothing recommendation system (10) comprising at least one processor (101), **characterized in that** the method comprises:

   acquiring (S11), from a measurement system (30) including a three-dimensional scanner or a sensor, a measured value of a body of a user, the measured value including at least a combination of an underbust breadth and an underbust depth;

acquiring (S11), from a terminal (20), additional information of the user other than the measured value;

receiving (S11) a clothing size of the user from the terminal (20), or referring (S12) to a database (40) storing clothing size information defining a correspondence relationship between a measured value of a body of a person and a clothing size to determine the clothing size of the user from the acquired measured value;

calculating (S12) a body oval that is a ratio between the underbust breadth and the underbust depth;

referring (S12) to the database (40) further storing a rule indicating a relationship between a measured value of a body of a person and a body type characteristic that is a characteristic of a body type of the person to determine the body type characteristic of the user from the calculated body oval;

referring (S13) to the database (40) further storing clothing information indicating a correspondence relationship between clothing items and body type characteristics, and retrieving (S13) a clothing item corresponding to the clothing size of the user, the determined body type characteristic, and the acquired additional information; and

transmitting (S15) recommendation information indicating the retrieved clothing item to the terminal (20).

**5.** A clothing recommendation program comprising instructions which, when the program is executed by a computer, cause the computer to carry out the method according to claim 4.

**Patentansprüche**

**1.** Ein Bekleidungsempfehlungssystem (10), das Folgendes beinhaltet:

mindestens einen Prozessor (101);

**dadurch gekennzeichnet, dass** der mindestens eine Prozessor zu Folgendem konfiguriert ist:

Erfassen, von einem einen dreidimensionalen Scanner oder einen Sensor umfassenden Messsystem (30) her, eines gemessenen Werts eines Köpers einer Benutzerin, wobei der gemessene Wert mindestens eine Kombination einer Unterbrustweite und einer Unterbrusttiefe umfasst;

Erfassen, von einem Endgerät (20) her, zusätzlicher Informationen der Benutzerin außer dem gemessenen Wert;

Empfangen einer Konfektionsgröße der Benutzerin von dem Endgerät (20) oder Nachschlagen in einer Datenbank (40), die Konfektionsgrößeninformationen speichert, die eine Entsprechungsbeziehung zwischen einem gemessenen Wert eines Körpers einer Person und einer Konfektionsgröße definieren, um die Konfektionsgröße der Benutzerin aus dem erfassten gemessenen Wert zu bestimmen;

Berechnen eines Körperovals, das ein Verhältnis zwischen der Unterbrustweite und der Unterbrusttiefe ist;

Nachschlagen in der Datenbank (40), die ferner eine Regel speichert, die eine Beziehung zwischen einem gemessenen Wert eines Körpers einer Person und einer Körpertypeigenschaft, die eine Eigenschaft eines Körpertyps der Person ist, angibt, um die Körpertypeigenschaft der Benutzerin aus dem berechneten Körperoval zu bestimmen;

Nachschlagen in der Datenbank (40), die ferner Bekleidungsinformationen speichert, die eine Entsprechungsbeziehung zwischen Bekleidungsstücken und Körpertypeigenschaften angibt, und Abrufen eines Bekleidungsstücks, das der Konfektionsgröße der Benutzerin, der bestimmten Körpertypeigenschaft und den erfassten zusätzlichen Informationen entspricht; und

Übertragen von Empfehlungsinformationen, die das abgerufene Bekleidungsstück angeben, an das Endgerät (20).

**2.** Bekleidungsempfehlungssystem (10) gemäß Anspruch 1, **dadurch gekennzeichnet, dass** das Bekleidungsstück Bekleidung ist, die einen Körbchenteil aufweist.

**3.** Bekleidungsempfehlungssystem (10) gemäß Anspruch 2, **dadurch gekennzeichnet, dass**

der gemessene Wert ferner mindestens eines von einer Kombination einer Brustkorbweite und der Unterbrustweite, einem Busenvolumen, das das Volumen eines Busens ist, einer Verge-Breite, die eine Breite einer Brustunterseite ist, und einem Busenabstandsmaß, das ein Abstand zwischen der linken und der rechten Brust ist, umfasst und

der mindestens eine Prozessor (101) die Körpertypeigenschaft der Benutzerin basierend auf mindestens einem von einer oberen Verjüngung, die ein Verhältnis zwischen der Brustkorbweite und der Unterbrustweite ist, dem Busenvolumen, der Verge-Breite und dem Busenabstandsmaß bestimmt.

4.  Ein Bekleidungsempfehlungsverfahren, das von einem Bekleidungsempfehlungssystem (10) ausgeführt wird, das mindestens einen Prozessor (101) beinhaltet, **dadurch gekennzeichnet, dass** das Verfahren Folgendes beinhaltet:

    Erfassen (S11), von einem einen dreidimensionalen Scanner oder einen Sensor umfassenden Messsystem (30) her, eines gemessenen Werts eines Köpers einer Benutzerin, wobei der gemessene Wert mindestens eine Kombination einer Unterbrustweite und einer Unterbrusttiefe umfasst;

    Erfassen (S11), von einem Endgerät (20) her, zusätzlicher Informationen der Benutzerin außer dem gemessenen Wert;

    Empfangen (S11) einer Konfektionsgröße der Benutzerin von dem Endgerät (20) her oder Nachschlagen (S12) in einer Datenbank (40), die Konfektionsgrößeninformationen speichert, die eine Entsprechungsbeziehung zwischen einem gemessenen Wert eines Körpers einer Person und einer Konfektionsgröße definieren, um die Konfektionsgröße der Benutzerin aus dem erfassten gemessenen Wert zu bestimmen;

    Berechnen (S12) eines Körperovals, das ein Verhältnis zwischen der Unterbrustweite und der Unterbrusttiefe ist;

    Nachschlagen (S12) in der Datenbank (40), die ferner eine Regel speichert, die eine Beziehung zwischen einem gemessenen Wert eines Körpers einer Person und einer Körpertypeigenschaft, die eine Eigenschaft eines Körpertyps der Person ist, angibt, um die Körpertypeigenschaft der Benutzerin aus dem berechneten Körperoval zu bestimmen;

    Nachschlagen (S13) in der Datenbank (40), die ferner Bekleidungsinformationen speichert, die eine Entsprechungsbeziehung zwischen Bekleidungsstücken und Körpertypeigenschaften angibt, und Abrufen (S13) eines Bekleidungsstücks, das der Konfektionsgröße der Benutzerin, der bestimmten Körpertypeigenschaft und den erfassten zusätzlichen Informationen entspricht; und

    Übertragen (S15) von Empfehlungsinformationen, die das abgerufene Bekleidungsstück angeben, an das Endgerät (20).

5.  Ein Bekleidungsempfehlungsprogramm, das Anweisungen beinhaltet, die, wenn das Programm von einem Computer ausgeführt wird, den Computer veranlassen, das Verfahren gemäß Anspruch 4 durchzuführen.

**Revendications**

1.  Un système de recommandation vestimentaire (10) comprenant :

    au moins un processeur (101) ;
    **caractérisé en ce que** l'au moins un processeur (101) est configuré pour :

    acquérir, auprès d'un système de mesure (30) incluant un scanner tridimensionnel ou un capteur, une valeur mesurée d'un corps d'un utilisateur, la valeur mesurée incluant au moins une combinaison d'une largeur sous buste et d'une profondeur sous buste ;

    acquérir, auprès d'un terminal (20), des informations supplémentaires relatives à l'utilisateur autres que la valeur mesurée ;

    recevoir une taille de vêtement de l'utilisateur provenant du terminal (20), ou se référer à une base de données (40) stockant des informations de taille de vêtement définissant une relation de correspondance entre une valeur mesurée d'un corps d'une personne et une taille de vêtement afin de déterminer la taille de vêtement de l'utilisateur d'après la valeur mesurée acquise ;

    calculer un ovale de corps qui est un rapport entre la largeur sous buste et la profondeur sous buste ;

    se référer à la base de données (40) stockant en sus une règle indiquant une relation entre une valeur mesurée d'un corps d'une personne et une caractéristique de type de corps qui est une caractéristique d'un type de corps de la personne afin de déterminer la caractéristique de type de corps de l'utilisateur d'après l'ovale de corps calculé ;

    se référer à la base de données (40) stockant en sus des informations vestimentaires indiquant une relation de correspondance entre des articles vestimentaires et des caractéristiques de type de corps, et récupérer un article vestimentaire correspondant à la taille de vêtement de l'utilisateur, à la caractéristique de type de corps déterminée, et aux informations supplémentaires acquises ; et

    transmettre des informations de recommandation indiquant l'article vestimentaire récupéré au terminal (20).

2.  Le système de recommandation vestimentaire (10) selon la revendication 1, **caractérisé en ce que** l'article vestimentaire est un vêtement qui présente une partie à bonnet.

3. Le système de recommandation vestimentaire (10) selon la revendication 2, **caractérisé en ce que**

la valeur mesurée inclut en sus au moins un élément parmi une combinaison d'une largeur de poitrine et de la largeur sous buste, un volume de buste qui est un volume du buste, une largeur de Verge qui est une largeur d'un bas des seins, et un pas de buste qui est un intervalle entre les seins droit et gauche, et l'au moins un processeur (101) détermine la caractéristique de type de corps de l'utilisateur sur la base au moins d'un élément parmi un cintré supérieur qui est un rapport entre la largeur de poitrine et la largeur sous buste, le volume de buste, la largeur de Verge, et le pas de buste.

4. Un procédé de recommandation vestimentaire exécuté par un système de recommandation vestimentaire (10) comprenant au moins un processeur (101), **caractérisé en ce que** le procédé comprend le fait :

d'acquérir (S11), auprès d'un système de mesure (30) incluant un scanner tridimensionnel ou un capteur, une valeur mesurée d'un corps d'un utilisateur, la valeur mesurée incluant au moins une combinaison d'une largeur sous buste et d'une profondeur sous buste ;

d'acquérir (S11), auprès d'un terminal (20), des informations supplémentaires relatives à l'utilisateur autres que la valeur mesurée ;

de recevoir (S11) une taille de vêtement de l'utilisateur provenant du terminal (20), ou de se référer (S12) à une base de données (40) stockant des informations de taille de vêtement définissant une relation de correspondance entre une valeur mesurée d'un corps d'une personne et une taille de vêtement afin de déterminer la taille de vêtement de l'utilisateur d'après la valeur mesurée acquise ;

de calculer (S12) un ovale de corps qui est un rapport entre la largeur sous buste et la profondeur sous buste ;

de se référer (S12) à la base de données (40) stockant en sus une règle indiquant une relation entre une valeur mesurée d'un corps d'une personne et une caractéristique de type de corps qui est une caractéristique d'un type de corps de la personne afin de déterminer la caractéristique de type de corps de l'utilisateur d'après l'ovale de corps calculé ;

de se référer (S13) à la base de données (40) stockant en sus des informations vestimentaires indiquant une relation de correspondance entre des articles vestimentaires et des caractéristiques de type de corps, et de récupérer (S13) un article vestimentaire correspondant à la taille de vêtement de l'utilisateur, à la caractéristique de type de corps déterminée, et aux informations supplémentaires acquises ; et

de transmettre (S15) des informations de recommandation indiquant l'article vestimentaire récupéré au terminal (20).

5. Un programme de recommandation vestimentaire comprenant des instructions qui, lorsque le programme est exécuté par un ordinateur, amènent l'ordinateur à mettre en oeuvre le procédé selon la revendication 4.

# Fig.1

Fig. 1 — Block diagram showing MEASUREMENT SYSTEM (30) connected to CLOTHING RECOMMENDATION SYSTEM (10), which contains ACQUISITION UNIT (11), DETERMINATION UNIT (12), RETRIEVAL UNIT (13), and TRANSMISSION UNIT (14). The system is connected to a DATABASE (40) and a TERMINAL (20).

# Fig.2

100

COMPUTER

101 — PROCESSOR

102 — MAIN STORAGE UNIT

103 — AUXILIARY STORAGE UNIT

110 — PROGRAM

104 — COMMUNICATION CONTROL UNIT

105 — INPUT DEVICE

106 — OUTPUT DEVICE

# Fig.3

| | | | | | | | |
|---|---|---|---|---|---|---|---|
| BODY OVAL | | 1 | 2 | 3 | 4 | 5 | |
| TOP TAPER | | 1 | 2 | 3 | 4 | 5 | |
| BUST VOLUME | | 1 | 2 | 3 | | | |
| VERGE'S WIDTH | | 1 | 2 | 3 | | | |
| BUST PITCH | | 1 | 2 | 3 | | | |

# Fig.4

| BODY TYPE CHARACTERISTIC | LEVEL | RANGE | CLOTHING ATTRIBUTES | | | |
|---|---|---|---|---|---|---|
| | | | WIRE DIAMETER | CUP VOLUME | FRONT CENTER | ... |
| BODY OVAL | 1 | $<Ta_1$ | ... | ... | ... | ... |
| | 2 | $\geq Ta_1$ AND $<Ta_2$ | ... | ... | ... | ... |
| | 3 | $\geq Ta_2$ AND $<Ta_3$ | ... | ... | ... | ... |
| | 4 | $\geq Ta_3$ AND $<Ta_4$ | ... | ... | ... | ... |
| | 5 | $\geq Ta_4$ | ... | ... | ... | ... |
| TOP TAPER | 1 | $<Tb_1$ | ... | ... | ... | ... |
| | 2 | $\geq Tb_1$ AND $<Tb_2$ | ... | ... | ... | ... |
| | 3 | $\geq Tb_2$ AND $<Tb_3$ | ... | ... | ... | ... |
| | 4 | $\geq Tb_3$ AND $<Tb_4$ | ... | ... | ... | ... |
| | 5 | $\geq Tb_4$ | ... | ... | ... | ... |
| BUST VOLUME | 1 | $<Tc_1$ | ... | ... | ... | ... |
| | 2 | $\geq Tc_1$ AND $<Tc_2$ | ... | ... | ... | ... |
| | 3 | $\geq Tc_2$ | ... | ... | ... | ... |
| VERGE'S WIDTH | 1 | $<Td_1$ | ... | ... | ... | ... |
| | 2 | $\geq Td_1$ AND $<Td_2$ | ... | ... | ... | ... |
| | 3 | $\geq Td_2$ | ... | ... | ... | ... |
| BUST PITCH | 1 | $<Te_1$ | ... | ... | ... | ... |
| | 2 | $\geq Te_1$ AND $<Te_2$ | ... | ... | ... | ... |
| | 3 | $\geq Te_2$ | ... | ... | ... | ... |

40

| CLOTHING ID | CLOTHING ATTRIBUTES | | | | | | | | | | | | |
|---|---|---|---|---|---|---|---|---|---|---|---|---|---|
| | PRODUCT NAME | MFR. NAME | BRAND | COLOR | SIZE | DESIGN | FUNC-TION | PRICE | ... | WIRE DIAMETER | CUP VOLUME | FRONT CENTER | ... |
| B0001 | ... | ... | ... | ... | ... | ... | ... | ... | ... | ... | ... | ... | ... |
| B0002 | ... | ... | ... | ... | ... | ... | ... | ... | ... | ... | ... | ... | ... |
| B0003 | ... | ... | ... | ... | ... | ... | ... | ... | ... | ... | ... | ... | ... |
| ... | ... | ... | ... | ... | ... | ... | ... | ... | ... | ... | ... | ... | ... |

EP 3 935 983 B1

# *Fig.5*

START

ACQUIRE SEARCH CRITERIA
(AT LEAST MEASURED VALUE OF BODY
AND ADDITIONAL INFORMATION) — S11

DETERMINE AT LEAST BODY TYPE
CHARACTERISTIC FROM
MEASURED VALUE OF BODY — S12

RETRIEVE CLOTHING ITEM CORRESPONDING TO
CLOTHING SIZE, BODY TYPE CHARACTERISTIC,
AND ADDITIONAL INFORMATION — S13

GENERATE RECOMMENDATION INFORMATION
INDICATING RETRIEVED CLOTHING ITEM — S14

TRANSMIT RECOMMENDATION INFORMATION
TO TERMINAL — S15

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011218876 A1
- JP 2009030194 A
- JP 2002074095 A